# EUROPEAN PATENT SPECIFICATION

(11) **EP 1 573 938 B1**
(45) Date of publication and mention of the grant of the patent: **03.08.2016**
(21) Application number: 03812665.2
(22) Date of filing: 06.11.2003
(51) Int. Cl.: H04B 7/08, H04L 25/02

(54) **DIVERSITY RECEIVER HAVING CROSS COUPLED CHANNEL PARAMETER ESTIMATION**
DIVERSITÄTSEMPFÄNGER MIT KREUZGEKOPPELTER KANALPARAMETERSCHÄTZUNG
RECEPTEUR DE DIVERSITE A ESTIMATION DE PARAMETRE DE CANAL INTERCONNECTEE

(30) Priority: 09.12.2002 EP 02080162
(43) Date of publication of application: 14.09.2005
(73) Proprietor: Koninklijke Philips N.V., 5656 AE Eindhoven (NL)
(72) Inventor: LINNARTZ, Johan, P., M., G., NL-5656 AA Eindhoven (NL)
(74) Representative: Damen, Daniel Martijn
(86) International application number: PCT/IB2003/050020
(87) International publication number: WO 2004/054132

(56) References cited:
- US-A- 6 137 843
- SCHMIDL T M ET AL: "The use of iterative channel estimation (ICE) to improve link margin in wideband CDMA systems" VEHICULAR TECHNOLOGY CONFERENCE, 1999 IEEE 49TH HOUSTON, TX, USA 16-20 MAY 1999, PISCATAWAY, NJ, USA,IEEE, US, 16 May 1999 (1999-05-16), pages 1307-1311, XP010342156 ISBN: 0-7803-5565-2
- YE LI: "Pilot-symbol-aided channel estimation for OFDM in wireless systems" VEHICULAR TECHNOLOGY CONFERENCE, 1999 IEEE 49TH HOUSTON, TX, USA 16-20 MAY 1999, PISCATAWAY, NJ, USA,IEEE, US, 16 May 1999 (1999-05-16), pages 1131-1135, XP010342070 ISBN: 0-7803-5565-2

## Description

The present invention relates to a diversity receiver having multiple antenna receiving branches.

The present invention also relates to a method for receive diversity wherein a signal is received through multiple antenna receiving branches.

Such a diversity receiver is known from JP-A-04-185130. The known diversity receiver has two RF antenna receiving branches. Each RF branch comprises an antenna, such that the two antennas are spatially separated at such a mutual distance that the antennas receive virtually non-correlated signals. In the known diversity receiver the branches further comprise in succession: filters coupled to the respective antennas, amplifiers, a delay device and a synthesizer or the like. Outputs of the branches are coupled to a combining circuit. The known diversity receiver reduces the effect of multipath distortion and attains a stable reception of received radio channels in a spread spectrum communication environment.

XP010342156 discloses the use of Iterative Channel Estimation (ICE) to improve link margin, wherein each finger comprises a channel estimator. It is a disadvantage of the known diversity receiver that a substantial amount of processing power is required for controlling the reception and selection of the received radio channels.

It is an object of the present invention to provide a diversity receiver showing more flexibility and enhanced trade-off between processing power and accuracy.

Thereto the diversity receiver according to the invention is characterized in that each branch has means for estimating at least a receiving channel parameter, and that the channel parameter estimating means in one branch are coupled to the channel parameter estimating means in an other branch for using at least a part of the channel parameter estimate in the one branch as an aid for estimating at least a receiving channel parameter in the other branch.

Similarly the method according to the invention is characterized in that in each branch an estimation is made about a received channel, and that channel estimation results from one branch are being used as an aid for estimating the received channel in an other branch.

It is an advantage of the diversity receiver and method according to the invention that in those diversity schemes which require knowledge about the channel characteristics, advantage can be taken of the fact that coupling between channel estimating means in the one branch and channel estimating means in an other branch at least partly prevents duplication of diversity processing and calculations. By exchanging information in particular in the form of channel parameter estimate information between various diversity branches, part of the diversity processing and calculations turn out to be redundant if observed from the angle of time. This way the fact is exploited that one antenna takes on a position for which the channel parameter estimates can be determined, while a little earlier or later at least partly the same calculations are made for an other antenna. Such calculations can now be omitted. Or put otherwise, when using the same processing power within an amount of time the channel estimation parameter results will advantageously be more accurate. These advantages also hold for a mobile communication device comprising such a diversity receiver.

One embodiment of the diversity receiver according to the invention is characterized in that the channel parameter estimate in the one branch is used as a starting point for the channel parameter estimate in the other branch.

Without redundancy in calculations and given the same processing power, channel estimates can now be calculated in a shorter amount of time or given an amount of processing time less processing power and calculations are required for acquiring the same results.

Another embodiment of the diversity receiver according to the invention is characterized in that the channel parameter estimate in the one branch provides a coarse channel parameter estimate, which coarse channel parameter estimate is used as a start for the channel parameter estimate in the other branch.

This embodiment of the diversity receiver according to the invention leads to more accurate channel estimate results.

Still another embodiment of the diversity receiver according to the invention is characterized in that the estimating means in the other branch are coupled to the estimating means in said one branch for using at least a part of the channel parameter estimate in the other branch as an aid for estimating the receiving parameter channel in said one branch.

This way the estimating means in the various branches are mutually coupled to one another leading to a multiplicity of mutually exchanged channel parameter estimate information or associated information accordingly providing a multiplicity of advantages.

A further embodiment of the diversity receiver according to the invention is characterized in that the diversity receiver has two antenna receiving branches.

This provides a simple and cost effective embodiment of the diversity receiver according to the invention.

Another advantageous further embodiment of the diversity receiver according to the invention is characterized in that the system is arranged for estimating a time delay between the appearance of a certain channel parameter estimate in the various branches.

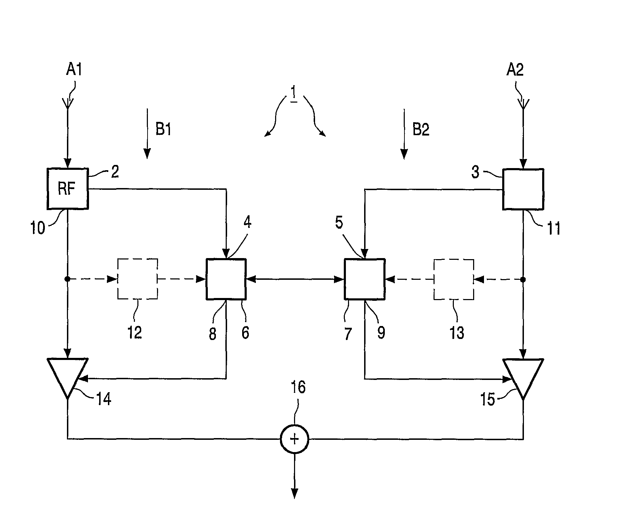

At present the diversity receiver and method according to the invention will be elucidated further together with their additional advantages, while reference is being made to the appended drawing, showing schematized embodiments of the diversity receiver according to the invention.

The sole Fig. shows a schematic view of a particular diversity receiver 1 having two antenna receiving branches B1 and B2 with the help whereof a method for receiving diversity signals will be explained. Each branch B1, B2 comprises receiving means, generally referred to as Radio Frequency (RF) receiving means 2, 3. The receiver as shown comprises two respective antennas A1, A2 coupled to the RF means 2, 3 respectively. The RF means 2, 3 generally include (not explicitly shown) either or not embodied in quadrature: filters, (low noise) amplifiers, mixers, oscillators, converters, analog or digital processing means, all as generally known in the relevant art. For example from the RF means 2 and 3 one or more signals are fed to inputs 4 and 5 respectively of channel parameter estimating means 6 and 7 respectively, in order to allow these means 6 and 7 to derive therefrom respective channel parameter quantities on outputs 8 and 9 respectively. Examples of channel parameters are for example the quality of received signals in one or more channels, or the channel transfer functions e.g. amplitudes and phases of each receiving channel in each branch. The channel parameter estimating means 6 and 7 can -at wish also- derive the respective parameter signals from outputs 10 and 11 of the RF means 2 and 3. For example the quality parameters may even be derived from data signals provided by output signals from hard limiters 12 and 13, as shown by dashed lines in the Fig. The channel parameter signals on the outputs 8 and 9 each comprise a measure for the estimate of the received signal in that particular receiving channel of the branches B1, B2 concerned. When the parameter concerns the channel quality such quality may be the common Received Signal Strength Indication, or shortly RRSI. Another example concerns checksums, used in certain cases in a Digital Enhanced Cordless Telecommunication (DECT) systems. The quality measurement may either be performed continuous or not. By means of the quality signals the diversity device 1 may determine which of the antennas A1, A2 is the best to be selected. This is schematically shown in the Fig. by means of controllable amplifiers 14 and 15 and a summing device 16 coupled to the amplifiers 14 and 15. Often both amplitude and phase information is used to ensure coherent addition of the signals in the summing device 16. In such case the controllable amplifiers 14 and 15 need to perform phase corrections. In fact in a practical embodiment it may well be that amplifiers 14 and 15 align the phases of the received signals, but do not modify the amplitudes of the signals. This process is called "equal gain combining". As described above another example of a channel parameter is the channel transfer function. Like the quality parameter the channel transfer function parameter calculation results may at least partly be exchanged between the channel parameter means 6 and 7. Possibly both the quality parameters and the channel transfer parameters may be exchanged in order to reduce the total amount of calculations for selecting the best antenna A1 or A2.

The channel estimating means 6 in one branch B1 are coupled to the channel estimating means 7 in the other branch B2 for using at least a part of the channel estimate in the one branch B1 as an aid for estimating the receiving channel in the other branch B2. Apart from the fact that one of the channel estimate means 6, 7 is coupled to its counterpart channel estimate means in the other branch for a one way exchange of channel estimate information or of information which can be of help therefor, it is also possible that the means 6, 7 mutually exchange such information at least during a certain period of time. This saves a considerable amount of processing power or leads to an increase of the accuracy of the channel estimates if the processing power remains constant. For example the channel estimate resulting from one of the estimate means 6 or 7 is used as a starting point for processing and calculations made in the other of the channel estimate means 7 or 6 or/and vice versa. It is also possible that the channel estimate calculated by the means 6, 7 in the one branch B1, B2 provides a coarse channel estimate, which coarse channel estimate is used as a starting point for processing and calculations made in the other of the channel estimate means 7, 6 or/and vice versa.

The positions of the antennas A1 and A2 are such that the instantaneous received signals thereon are not correlated. However if with respect to the received signals a time difference not equal to zero is observed then the signals show correlation, which is advantageously used in the system 1. Generally the distance d between the antennas A1 and A2 is much larger than the wavelength of the received signal divided by two in order to acquire optimum antenna diversity results. If the system 1 is positioned in a vehicle moving at a speed v and if the antennas are roughly positioned on a straight line in the direction of motion, then it can be said that channel parameter estimates from the one antenna are used to better estimate the channel for the other antenna, but a time delay of d/v seconds later. In another practical embodiment of the system 1 the delay value of d/v may be estimated explicitly for example in the estimating means 6, 7. The delay value is then used for the estimated channel parameters, to optimally synchronize the estimation process in the various branches.

Although only two branches are shown in the sole Fig. it is also possible to have more than two branches and associated antennas. In that case the respective channel estimating means may at wish exchange channel estimate information or information related thereto, such as intermediate results, or may for example all mutually exchange such information, in order to use at least a part of the channel estimate or related information in one of the branches as an aid for estimating the receiving channel in one of the other branches.

The method explained above can also find application in mobile communication devices or systems, such as car radio or car communication systems. Examples thereof are Orthogonal Frequency Division Multiplexing (OFDM) systems, where diversity generally requires a lot of calculating and processing time, due to the multiplicity of sub-carriers carrying independent data. Other examples are Digital Video Broadband (DVB) systems, such as DVB-T (Terrestrial), ISDB systems, Carrier Detect Multiple Access (CDMA) systems, for instance cellular CDMA; Universal Mobile Telecommunication Systems (UMTS), Global Systems for Mobile communications (GSM) and the mentioned DECT systems. In the case of OFDM signals, the (vector) outputs 10, 11 typically consist of multiple parallel subcarrier signals (e.g. 64 for WLANs, 2k..8k for DVB-T). In that case the branches are repeated for every subcarrier. In the case of direct sequence CDMA, the receiver branches typically form a so called rake receiver. In such case the outputs 10 and 11 each carry vector signals, containing the signals in the various fingers of the rake. The controllable amplifiers 14, 15 then operate on all finger signals. The addition in summing device 16 then accumulates all signals of all fingers in all branches.

## Claims

1. A diversity receiver having multiple antenna receiving branches, **characterized in that** each branch has means for estimating at least a receiving channel parameter, and that the channel parameter estimating means in one branch are coupled to the channel parameter estimating means in an other branch for using at least a part of the channel parameter estimate in the one branch as an aid for estimating at least a receiving channel parameter in the other branch.

2. The diversity receiver according to claim 1, **characterized in that** the channel parameter estimate in the one branch is used as a starting point for the channel parameter estimate in the other branch.

3. The diversity receiver according to claim 1 or 2, **characterized in that** the channel parameter estimate in the one branch provides a coarse channel parameter estimate, which coarse channel parameter estimate is used as a start for the channel parameter estimate in the other branch.

4. The diversity receiver according to one of the claims 1-3, **characterized in that** the estimating means in the other branch are coupled to the estimating means in said one branch for using at least a part of the channel parameter estimate in the other branch as an aid for estimating the receiving parameter channel in said one branch.

5. The diversity receiver according to one of the claims 1-4, **characterized in that** the diversity receiver has two antenna receiving branches.

6. The diversity receiver according to one of the claims 1-5, **characterized in that** the system (1) is arranged for estimating a time delay between the appearance of a certain channel parameter estimate in the various branches.

7. A mobile radio communication device provided with a diversity receiver according to one of the claims 1-5, diversity receiver having multiple antenna receiving branches, **characterized in that** each branch has means for estimating at least a receiving channel parameter, and that the channel parameter estimating means in one branch are coupled to the channel parameter estimating means in an other branch for using at least a part of the channel parameter estimate in the one branch as an aid for estimating at least a receiving channel parameter in the other branch.

8. A method for receive diversity wherein a signal is received through multiple antenna receiving branches, **characterized in that** in each branch an estimation is made about a received channel, and that channel estimation results from one branch are being used as an aid for estimating the received channel in an other branch.

## Patentansprüche

1. Diversitätsempfänger mit mehreren Antennenempfangszweigen, **dadurch gekennzeichnet, dass** jeder Zweig Mittel zur Schätzung von zumindest einem Empfangskanalparameter aufweist, und dass die Kanalparameterschätzmittel in einem Zweig mit den Kanalparameterschätzmitteln in einem anderen Zweig gekoppelt sind, um zumindest einen Teil der Kanalparameterschätzung in dem einen Zweig als eine Hilfe zur Schätzung von zumindest einem Empfangskanalparameter in dem anderen Zweig zu verwenden.

2. Diversitätsempfänger nach Anspruch 1, **dadurch gekennzeichnet, dass** die Kanalparameterschätzung in dem einen Zweig als ein Startpunkt für die Kanalparameterschätzung in dem anderen Zweig verwendet wird.

3. Diversitätsempfänger nach Anspruch 1 oder 2, **dadurch gekennzeichnet, dass** die Kanalparameterschätzung in dem einen Zweig eine grobe Kanalparameterschätzung vorsieht, wobei die grobe Kanalparameterschätzung als ein Start für die Kanalparameterschätzung in dem anderen Zweig eingesetzt wird.

4. Diversitätsempfänger nach einem der Ansprüche 1-3, **dadurch gekennzeichnet, dass** die Schätzmittel in dem anderen Zweig mit den Schätzmitteln in dem besagten einen Zweig gekoppelt sind, um zumindest einen Teil der Kanalparameterschätzung in dem anderen Zweig als eine Hilfe zur Schätzung des Empfangskanalparameters in dem besagten einen Zweig zu verwenden.

5. Diversitätsempfänger nach einem der Ansprüche 1-4, **dadurch gekennzeichnet, dass** der Diversitätsempfänger zwei Antennenempfangszweige aufweist.

6. Diversitätsempfänger nach einem der Ansprüche 1-5, **dadurch gekennzeichnet, dass** das System (1) zur Schätzung einer Zeitverzögerung zwischen dem Auftreten einer bestimmten Kanalparameterschätzung in den verschiedenen Zweigen eingerichtet ist.

7. Mobilfunkkommunikationseinrichtung, die mit einem Diversitätsempfänger nach einem der Ansprüche 1-5 versehen ist, wobei der Diversitätsempfänger mehrere Antennenempfangszweige aufweist, **dadurch gekennzeichnet, dass** jeder Zweig Mittel zur Schätzung von zumindest einem Empfangskanalparameter aufweist, und dass die Kanalparameterschätzmittel in einem Zweig mit den Kanalparameterschätzmitteln in einem anderen Zweig gekoppelt sind, um zumindest einen Teil der Kanalparameterschätzung in dem einen Zweig als eine Hilfe zur Schätzung von zumindest einem Empfangskanalparameter in dem anderen Zweig zu verwenden.

8. Verfahren zum Diversitätsempfang, wobei ein Signal über mehrere Antennenempfangszweige empfangen wird, **dadurch gekennzeichnet, dass** in jedem Zweig eine Schätzung über einen empfangenen Kanal vorgenommen wird, und dass die Kanalschätzungsergebnisse von einem Zweig als eine Hilfe zur Schätzung des empfangenen Kanals in einem anderen Zweig verwendet werden.

## Revendications

1. Récepteur de diversité ayant de multiples branches de réception d'antenne, **caractérisé en ce que** chaque branche comporte un moyen pour estimer au moins un paramètre de canal de réception, et que le moyen d'estimation de paramètre de canal d'une première branche est couplé au moyen d'estimation de paramètre de canal d'une autre branche pour utiliser au moins une partie de l'estimation de paramètre de canal de la première branche comme aide pour estimer au moins un paramètre de canal de réception de l'autre branche.

2. Récepteur de diversité selon la revendication 1, **caractérisé en ce que** l'estimation de paramètre de canal de la première branche est utilisée comme point de départ de l'estimation de paramètre de canal de l'autre branche.

3. Récepteur de diversité selon la revendication 1 ou 2, **caractérisé en ce que** l'estimation de paramètre de canal de la première branche fournit une estimation de paramètre de canal grossière, laquelle estimation de paramètre de canal grossière est utilisée comme début de l'estimation de paramètre de canal de l'autre branche.

4. Récepteur de diversité selon l'une des revendications 1-3, **caractérisé en ce que** le moyen d'estimation de l'autre branche est couplé au moyen d'estimation de ladite première branche pour utiliser au moins une partie de l'estimation de paramètre de canal de l'autre branche comme aide pour estimer le paramètre de canal de réception de ladite première branche.

5. Récepteur de diversité selon l'une des revendications 1-4, **caractérisé en ce que** le récepteur de diversité possède deux branches de réception d'antenne.

6. Récepteur de diversité selon l'une des revendications 1-5, **caractérisé en ce que** le système (1) est agencé pour estimer un délai de temporisation entre l'aspect d'une certaine estimation de paramètre de canal des diverses branches.

7. Dispositif de communication radio mobile pourvu d'un récepteur de diversité selon l'une des revendications 1-5, le récepteur de diversité ayant de multiples branches de réception d'antenne, **caractérisé en ce que** chaque branche comporte un moyen pour estimer au moins un paramètre de canal de réception, et que le moyen d'estimation de paramètre de canal d'une première branche est couplé au moyen d'estimation de paramètre de canal d'une autre branche pour utiliser au moins une partie de l'estimation de paramètre de canal de la première branche comme aide pour estimer au moins un paramètre de canal de réception de l'autre branche.

8. Procédé pour recevoir une diversité dans lequel un signal est reçu par le biais de multiples branches de réception d'antenne, **caractérisé en ce que**, dans chaque branche, une estimation est faite concernant un canal reçu, et que des résultats d'estimation de canal d'une première branche sont utilisés comme aide pour estimer le canal reçu d'une autre branche.
